# EUROPEAN PATENT APPLICATION

(11) **EP 4 404 364 A1**
(43) Date of publication of application: **24.07.2024**
(21) Application number: 22869719.9
(22) Date of filing: 05.08.2022
(51) Int. Cl.: H01M 50/392, F16K 15/14, H01M 50/317, H01M 50/325

(54) **PRESSURE-REGULATING VALVE FOR POWER STORAGE MODULE**

(30) Priority: 16.09.2021 JP 2021151487
(71) Applicant: NOK Corporation, Minato-ku Tokyo 105-8585 (JP)
(72) Inventor: NAGASAWA Motohiro, Kitaibaraki-shi, Ibaraki 319-1535 (JP); SAKUMA Katsuyoshi, Kitaibaraki-shi, Ibaraki 319-1535 (JP)
(74) Representative: TBK
(86) International application number: PCT/JP2022/030140
(87) International publication number: WO 2023/042571

(57) **Abstract**

Discharge of an electrolyte is improved. A pressure-regulating valve (1) for a power storage module includes a valve body portion (10) that opens in response to pressure in a power storage module to release the pressure in the power storage module, and an electrolyte reservoir portion (130) provided between the valve body portion (10) and the power storage module, and capable of storing the electrolyte leaking from an inside of the power storage module to a valve body portion (10) side.

## Description

### Technical Field

The present invention relates to a pressure-regulating valve for a power storage module.

### Background Art

Conventionally, in power storage modules such as a nickel hydrogen battery, there has been known a power storage module including a pressure-regulating valve that opens to discharge gas from the module when the gas such as hydrogen gas is generated due to overdischarge or the like and the inside of the module has a predetermined pressure. Note that in the pressure-regulating valves for a power storage module (hereinafter referred to as "pressure-regulating valve for a power storage module"), there is known a pressure-regulating valve capable of pressure regulation of a plurality of internal spaces between bipolar electrodes with a simple configuration (see Patent Literature 1, for example).

### Document List

### Patent Literature

Patent Literature 1: International Publication No. WO 2019/064843

### Summary of Invention

### Technical Problem

Incidentally, in a pressure-regulating valve for a power storage module, an electrolyte may be discharged with gas when the valve opens. In this case, the electrolyte may be accumulated inside the pressure-regulating valve for a power storage module.

However, since in the conventional pressure-regulating valve for a power storage module, a plurality of valve bodies are provided in one discharge port, it has been difficult to discharge an electrolyte without delay. In addition, since it is difficult for the conventional pressure-regulating valve for a power storage module to discharge an electrolyte without delay, a plurality of valve bodies are in the state of being immersed in the electrolyte. In this case, the conventional pressure-regulating valve for a power storage module has a possibility of causing a short circuit between a plurality of cells through the electrolyte when the plurality of valve bodies simultaneously open and the electrolyte is discharged.

The present invention is made in view of the aforementioned problem, and it is an object of the present invention to provide a pressure-regulating valve for a power storage module capable of improving discharge of an electrolyte.

### Solution to Problem

In order to attain the above-described object, a pressure-regulating valve for a power storage module according to the present invention includes a valve body portion that opens in response to pressure in a power storage module to release the pressure in the power storage module, and an electrolyte reservoir portion provided between the valve body portion and the power storage module, and capable of storing an electrolyte leaking from an inside of the power storage module toward the valve body portion.

In the pressure-regulating valve for a power storage module according to one aspect of the present invention, the electrolyte reservoir portion is configured by a member separate from the valve body portion.

In the pressure-regulating valve for a power storage module according to one aspect of the present invention, the electrolyte reservoir portion is formed into a plate shape.

In the pressure-regulating valve for a power storage module according to one aspect of the present invention, the electrolyte reservoir portion has an air chamber having a space communicating with the valve body portion.

In the pressure-regulating valve for a power storage module according to one aspect of the present invention, the air chamber is provided on each of one end side and another end side of the electrolyte reservoir portion, and the electrolyte reservoir portion has a flow path portion that causes the air chamber provided on the one end side and the air chamber provided on the other end side to communicate with each other.

In the pressure-regulating valve for a power storage module according to one aspect of the preset invention, the electrolyte reservoir portion has a plurality of the air chambers.

### Effects of Invention

According to the pressure-regulating valve for a power storage module according to the present invention, it is possible to improve discharge of the electrolyte.

### Brief Description of Drawings

[Fig. 1] Fig. 1 is a perspective view schematically showing a power storage module to which a pressure-regulating valve for a power storage module according to an embodiment of the present invention is connected.
[Fig. 2] Fig. 2 is an exploded perspective view for showing a rough configuration of the pressure-regulating valve for a power storage module according to the embodiment of the present invention.
[Fig. 3] Fig. 3 is an exploded perspective view for showing the rough configuration of the pressure-regulating valve for a power storage module shown in Fig. 2.
[Fig. 4] Fig. 4 is a sectional view of the pressure-regulating valve for a power storage module shown in Fig. 2.
[Fig. 5] Fig. 5 is a front view of a case portion of the pressure-regulating valve for a power storage module shown in Fig. 2.
[Fig. 6] Fig. 6 is a sectional view taken along line A-A of the case portion shown in Fig. 3.
[Fig. 7] Fig. 7 is a front view of a cover portion of the pressure-regulating valve for a power storage module shown in Fig. 2.
[Fig. 8] Fig. 8 is a plan view of the cover portion shown in Fig. 5.
[Fig. 9] Fig. 9 is a perspective view showing an electrolyte reservoir portion of the pressure-regulating valve for a power storage module shown in Fig. 2.
[Fig. 10] Fig. 10 is a front view of the electrolyte reservoir portion shown in Fig. 9.
[Fig. 11] Fig. 11 is a plan view of the electrolyte reservoir portion shown in Fig. 9.

### Description of Embodiment

Hereinafter, an embodiment of the present invention will be described with reference to the drawings.

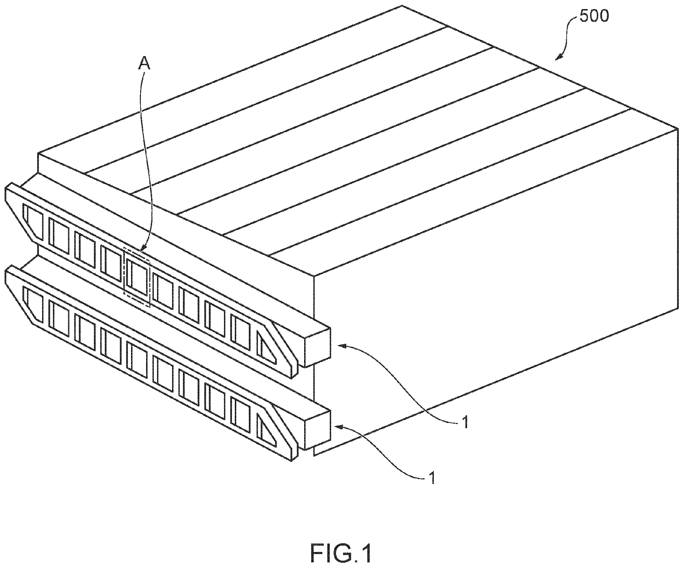

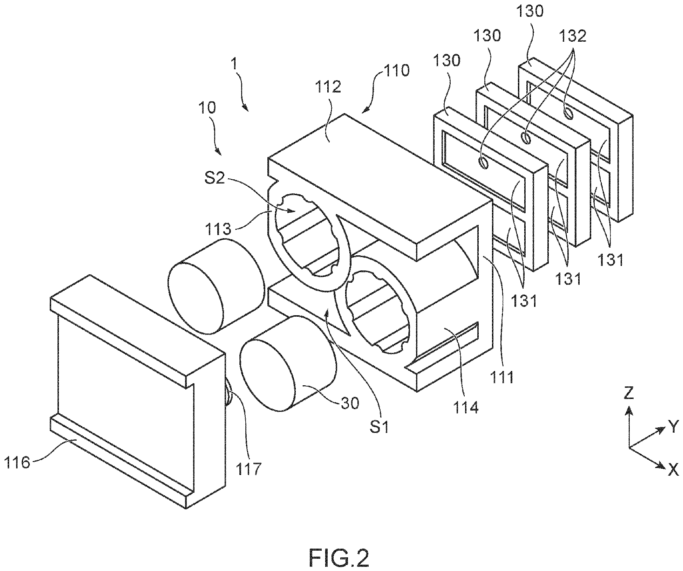

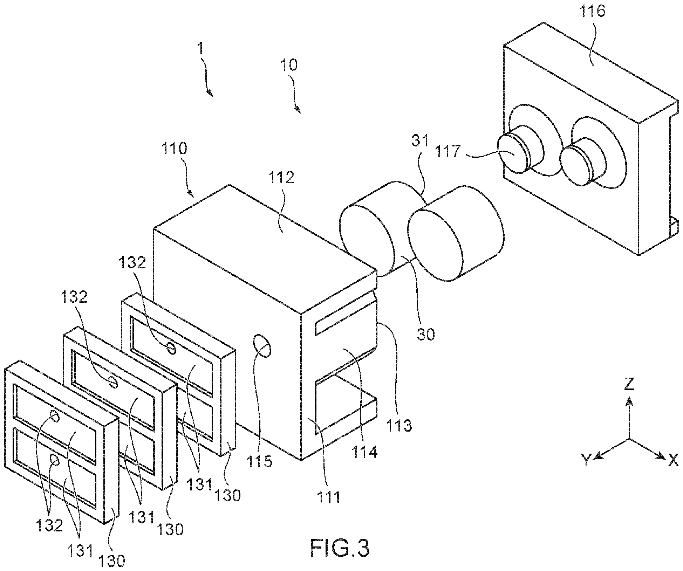

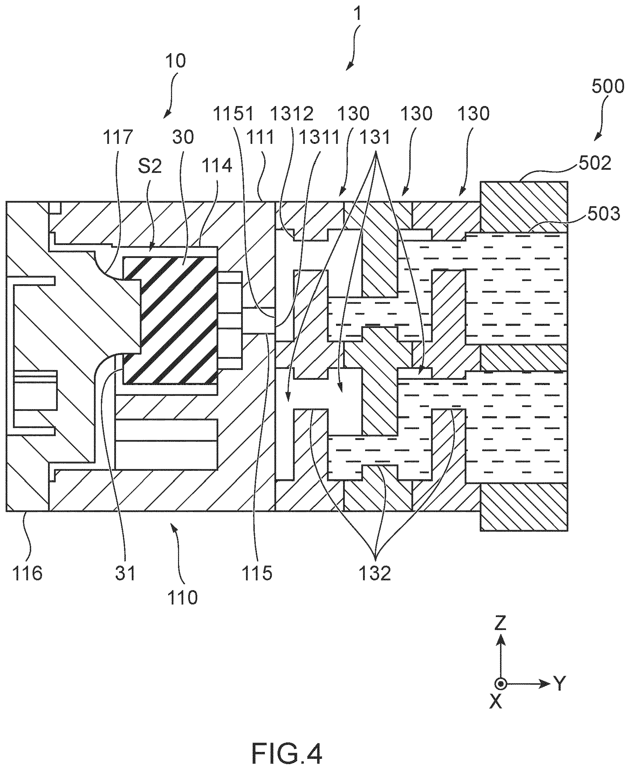

Fig. 1 is a perspective view schematically showing a power storage module 500 to which a pressure-regulating valve 1 for a power storage module according to the embodiment of the present invention is connected. Fig. 2 and Fig. 3 are exploded perspective views for showing a rough configuration of the pressure-regulating valve 1 for a power storage module according to the embodiment of the present invention. Fig. 4 is a sectional view of the pressure-regulating valve 1 for a power storage module. In Fig. 2 and the following figures, the pressure-regulating valve 1 for a power storage module is shown by a partially enlarged view in which a part A shown in Fig. 1 is enlarged.

Hereinafter, for convenience of explanation, in the pressure-regulating valve 1 for a power storage module shown in Fig. 2, Fig. 3, and Fig. 4, an axial direction of a circular columnar valve body 30 is defined as a Y-axis direction. The Y-axis direction is also referred to as a front-back direction. In the pressure-regulating valve 1 for a power storage module, a +Y-axis direction is also referred to as one end side, and a -Y-axis direction is also referred to as another end side. Furthermore, in the present embodiment, a direction in which the pressure-regulating valve 1 for a power storage module is seen toward the +Y-axis direction is defined as a front direction. One (X-axis direction) of directions orthogonal to the front-back direction (Y-axis direction) is defined as a width direction. The width direction is a longitudinal direction of a valve body portion 10 of the pressure-regulating valve 1 for a power storage module. The width direction is also referred to as a left-right direction. Further, a direction (Z-axis direction) orthogonal to both the front-back direction (Y-axis direction) and the left-right direction (X-axis direction) is also referred to as an up-down direction or a height direction. When a positional relationship and a direction of each component are explained as a right side, left side, front side, rear side, upper side, and lower side in the following explanation, they show only the positional relationship and direction in the drawings, and do not limit the positional relationship and the direction in the actual pressure-regulating valve for a power storage module.

As shown in Fig. 2, Fig. 3 and Fig. 4, the pressure-regulating valve 1 for a power storage module according to the embodiment of the present invention includes the valve body portion 10 that opens in response to pressure in the power storage module 500 to release the pressure in the power storage module 500, and an electrolyte reservoir portion 130 provided between the valve body portion 10 and the power storage module 500 and capable of storing an electrolyte leaking from an inside of the power storage module 500 to a valve body portion 10 side. In a frame body 502 that holds a plurality of electrode plates of the power storage module 500, the pressure-regulating valve 1 closes an opening 503 that communicates with spaces among the plurality of electrode plates provided in the frame body 502. In the pressure-regulating valve 1, the valve body portion 10 has one end connected to the opening 503, and has an internal space S1 inside. In the internal space S1 of the valve body portion 10, the columnar valve body 30 which is an elastic member is accommodated. The valve body portion 10 includes a bottom portion 111 provided on one end side, an opening portion 113 provided on another end side, a case cylindrical portion 114 provided in the internal space S1 of the valve body portion 10 and capable of accommodating the valve body 30, a pressure introducing portion 115 penetrating through the bottom portion 111, a cover portion 116 as a lid portion that closes the opening portion 113, and a protrusion portion 117 that is provided at the cover portion 116 and contacts an end surface 31 of the valve body 30 from the other end side. The electrolyte reservoir portion 130 includes an air chamber 131 that is a space communicating with an outside of the valve body portion 10, specifically, the opening 503 of the frame body 502 and the pressure introducing portion 115. Hereinafter, the pressure-regulating valve 1 for a power storage module will be specifically described.

As described above, the pressure-regulating valve 1 for a power storage module (hereinafter referred to as the "pressure-regulating valve 1") includes the valve body portion 10 that accommodates the valve body 30 and is attached to the opening 503 of the power storage module 500.

Although a material of the valve body portion 10 is not particularly limited, a synthetic resin or the like can be cited, for example. The valve body portion 10 can be formed into a substantially rectangular parallelepiped shape or the like, for example. A shape of the valve body portion 10 is not particularly limited if the valve body portion 10 can close the opening 503. Further, a size of the valve body portion 10 can also be appropriately set in relation to a size of the power storage module 500 or the opening 503 and is not particularly limited. The valve body portion 10 is configured by a case portion 110 and the cover portion 116 as a separate member. The electrolyte reservoir portion 130 is configured as a separate member from the valve body portion 10. In the pressure-regulating valve 1, materials of the case portion 110, the cover portion 116, and the electrolyte reservoir portion 130 may be the same material, or different materials.

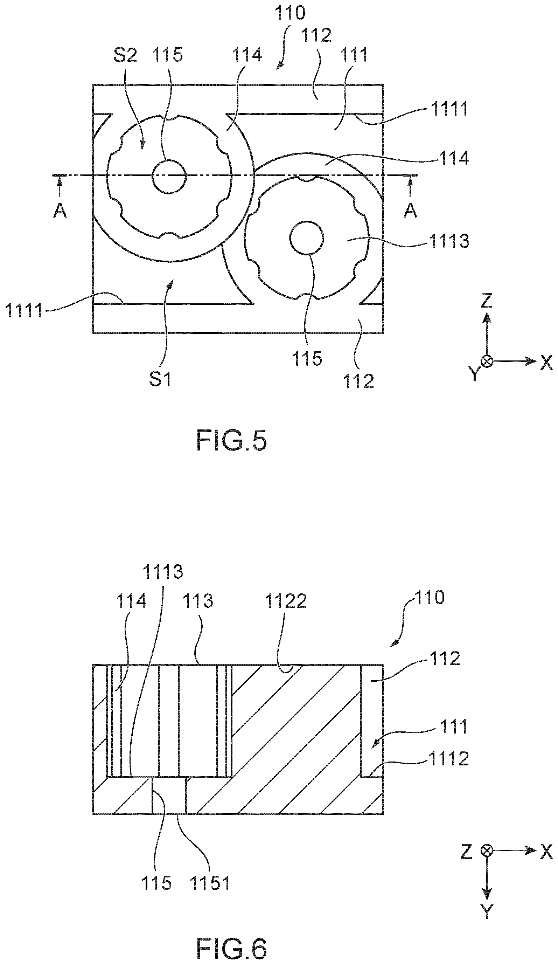

Fig. 5 is a front view of the case portion 110 of the pressure-regulating valve 1 for a power storage module. Fig. 6 is a sectional view taken along line A-A of the case portion 110.

As shown in Fig. 5 and Fig. 6, the case portion 110 is a box-shaped member formed into a rectangular parallelepiped shape in which a dimension in the width direction is longer than dimensions in the height direction and the front-back direction, for example. The case portion 110 includes the bottom portion 111, an outer peripheral wall part 112, the opening portion 113, the case cylindrical portion 114, and the pressure introducing portion 115.

The bottom portion 111 is provided on the one end side of the case portion 110. The bottom portion 111 is attached to face the opening 503 via the electrolyte reservoir portion 130 in the state in which the pressure-regulating valve 1 is attached to the opening 503 of the frame body 502 as shown in Fig. 4. The bottom portion 111 is formed to be able to close the opening 503 via the electrolyte reservoir portion 130 in the state of being attached to the opening 503.

The outer peripheral wall part 112 is provided at an end portion of an outer periphery of the bottom portion 111. The outer peripheral wall part 112 is provided at an end portion 1111 in the up-down direction of the bottom portion 111. The outer peripheral wall part 112 is a wall-shaped member that rises from the end portion 1111 in the up-down direction of the bottom portion 111 to the other end side (-Y-axis direction). The bottom portion 111 and the outer peripheral wall part 112 form the internal space S1 that is isolated from an outside inside the case portion 110.

The opening portion 113 is provided in an end portion 1122 on another end side of the outer peripheral wall part 112. As a result of the opening portion 113 being provided, another end side of the internal space S1 of the case portion 110 is opened to the outside.

The case cylindrical portion 114 is provided in the internal space S1 of the case portion 110. The case cylindrical portion 114 is a cylindrical or substantially cylindrical part having an axial direction in the front-back direction (Y-axis direction) in the case portion 110. In the internal space S1, one or a plurality of case cylindrical portions 114 are provided. In the pressure-regulating valve 1, the number of case cylindrical portions 114 is not particularly limited. The case cylindrical portion 114 has one end integrated with an inner surface 1112 that is a surface on another end side of the bottom portion 111. The case cylindrical portion 114 has another end opened to the opening portion 113. The case cylindrical portion 114 can accommodate the valve body 30 in a cylindrical or substantially cylindrical accommodation space S2 inside. In other words, the pressure-regulating valve 1 can accommodate a plurality of valve bodies 30 correspondingly to the number of case cylindrical portions 114 provided in the internal space S1.

The pressure introducing portion 115 is provided in a cylindrical portion bottom portion 1113 that is a bottom portion located inside the case cylindrical portion 114. The pressure introducing portion 115 is a through-hole extending in the Y-axis direction in the cylindrical portion bottom portion 1113. In other words, the pressure introducing portion 115 penetrates through one end side and another end side of the cylindrical portion bottom portion 1113. The pressure introducing portion 115 is not limited to the one provided in a vicinity of a center of a circular shape or substantially circular shape of the cylindrical portion bottom portion 1113 as shown in Fig. 4. Further, the pressure introducing portion 115 is typically a circular columnar space, but the shape of the pressure introducing portion 115 is not particularly limited, and can be, for example, an elliptical columnar or a polygonal prism-shaped space.

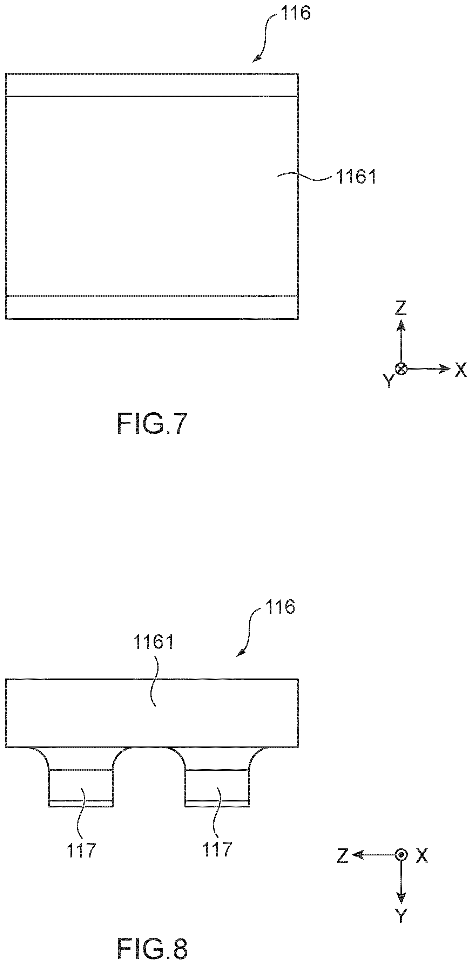

Fig. 7 is a front view of the cover portion 116 of the pressure-regulating valve 1 for a power storage module. Fig. 8 is a plan view of the cover portion 116.

As shown in Fig. 7 and Fig. 8, the cover portion 116 is, for example, a plate-like or substantially plate-like member formed in a rectangular shape in which a dimension in the width direction is longer than a dimension in the height direction. The cover portion 116 includes a cover portion body 1161, and the protrusion portion 117.

The cover portion body 1161 defines an approximate shape of the aforementioned plate-like or substantially plate-like cover portion 116. The shape of the cover portion body 1161 is not limited to the shape shown in Fig. 7 and Fig. 8 if only the cover portion 116 can be combined with the case portion 110.

The protrusion portion 117 is a part having a protruded shape protruding in the Y-axis direction from the cover portion body 1161. The protrusion portions 117 are provided correspondingly to the number of case cylindrical portions 114. The protrusion portion 117 is provided at a position inside a cylindrical surface of the case cylindrical portion 114 in the state in which the cover portion 116 and the case portion 110 are combined as shown in Fig. 3. The protrusion portion 117 protrudes to a case portion 110 side located on the one end side (+Y-axis direction), and presses the valve body 30 positioned inside the case cylindrical portion 114 from an opening portion 113 side in the state in which the cover portion 116 and the case portion 110 are combined.

The protrusion portion 117 contacts the end surface 31 of the valve body 30. By closing the opening portion 113 of the case portion 110 with the cover portion 116, the protrusion portion 117 pressurizes the valve body 30. The valve body 30 closes the pressure introducing portion 115 airtightly as described later.

As long as the protrusion portion 117 can pressurize the valve body 30 by closing the opening portion 113 of the case portion 110 with the cover portion 116, a shape and a dimension of the protrusion portion 117 are not particularly limited, and the protrusion portion 117 can have, for example, a circular columnar shape, an elliptical columnar shape, a polygonal prism shape, or the like.

As shown in Fig. 2 to Fig. 4, the electrolyte reservoir portion 130 is attached to one end side of the bottom portion 111 of the case portion 110 in the valve body portion 10. In the pressure-regulating valve 1, a plurality of, for example, three electrolyte reservoir portions 130 may be attached, or the single electrolyte reservoir portion 130 may be attached.

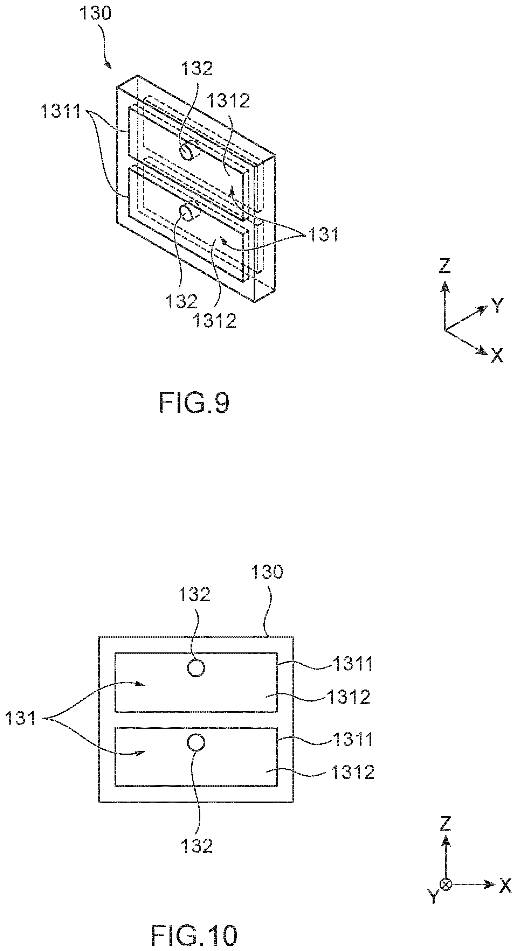

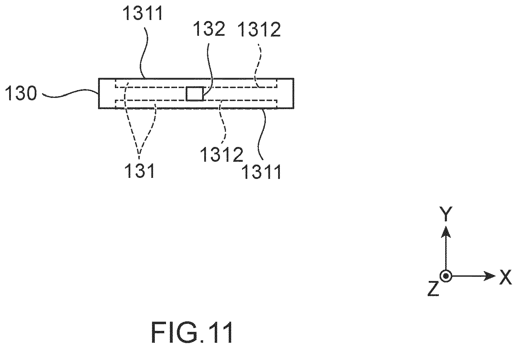

Fig. 9 is a perspective view showing the electrolyte reservoir portion 130 of the pressure-regulating valve 1. Fig. 10 is a front view of the electrolyte reservoir portion 130. Fig. 11 is a plan view of the electrolyte reservoir portion 130.

As shown in Fig. 9 to Fig. 11, the electrolyte reservoir portion 130 has the air chamber 131 and a flow path portion 132. The electrolyte reservoir portion 130 is formed as a separate member from the case portion 110 and the cover portion 116. The electrolyte reservoir portion 130 is formed in a plate shape or a substantially plate shape in which a dimension in the front-back direction (Y-axis direction) is short with respect to dimensions in the height direction (Z-axis direction) and the width direction (X-axis direction) of the pressure-regulating valve 1.

The air chamber 131 is formed into a recessed shape having a depth in the Y-axis direction as shown in Fig. 11 in surfaces on one end side (+Y-axis direction) and another end side (-Y-axis direction) of the electrolyte reservoir portion 130. In the air chamber 131, an air chamber opening portion 1311 opens on the surfaces on the one end side (+Y-axis direction) and the other end side (-Y-axis direction) of the electrolyte reservoir portion 130. A shape of the air chamber 131 is, for example, a rectangle or substantially rectangle in plan view as shown in Fig. 10. Note that the shape of the air chamber 131 is not limited to the aforementioned shape if the air chamber 131 can store the electrolyte, compressed gas or the like discharged from the opening 503 of the power storage module 500.

In the electrolyte reservoir portion 130, the air chambers 131 are provided at a total of four spots, for example, two spots on each of the surfaces on the one end side (+Y-axis direction) and on the other end side (-Y-axis direction). Note that the number of air chambers 131 is not limited to the aforementioned example.

The flow path portion 132 is a hole that penetrates through respective bottom portions 1312 in the air chamber 131 on the one end side and the air chamber 131 on the other end side, in the electrolyte reservoir portion 130. The flow path portion 132 causes the air chambers 131 provided on both the one end side and the other end side of the electrolyte reservoir portion 130 to communicate with each other.

As shown in Fig. 4, in the pressure-regulating valve 1, a plurality of (for example, three) electrolyte reservoir portions 130 are attached by being stacked on each other in the front-back direction (Y-axis direction) that is a discharge direction of emissions such as the electrolyte or compressed gas discharged from the opening 503 of the power storage module 500. In one of the three electrolyte reservoir portions 130, the air chamber opening portion 1311 on the one end side faces the opening 503 of the frame body 502. As a result of the electrolyte reservoir portion 130 is positioned in this manner, the air chamber 131 on the one end side communicates with the opening 503 of the frame body 502. In the pressure-regulating valve 1, in one of the three electrolyte reservoir portions 130, the air chamber opening portion 1311 on the other end side faces the opening 1151 on the one end side of the pressure introducing portion 115 of the case portion 110. As a result of the electrolyte reservoir portion 130 being positioned in this manner, the air chamber 131 on the other end side communicates with the pressure introducing portion 115. In the plurality of electrolyte reservoir portions 130, a flow path in which the air chambers 131 and the flow path portions 132 communicate with each other to penetrate in the front-back direction is formed. Note that the number of electrolyte reservoir portions 130 is not limited to the aforementioned number. By increasing the number of electrolyte reservoir portions 130, it is possible to increase a volume of the electrolyte reservoir portion 130 in the pressure-regulating valve 1. By increasing the volume of the electrolyte reservoir portion 130, the pressure-regulating valve 1 can cope with even the case in which the overflowing electrolyte increases.

As shown in Fig. 2, the valve body 30 is a columnar valve body to be accommodated in the case cylindrical portion 114 of the case portion 110 in the valve body portion 10. A material of the valve body 30 is, for example, an elastic member such as a rubber. The material of the valve body 30 is not particularly limited as long as the material is an elastic member. The valve body 30 is positioned to cover a cylindrical portion bottom portion 1113 side in the case cylindrical portion 114. In the valve body 30, a length in the axial direction (Y-axis direction) of the valve body 30 is shorter as compared with an outside diameter.

The valve body 30 has a columnar shape, in which the length in the axial direction is shorter as compared with the outside diameter as described above, and the "columnar shape" can also be referred to as a plate shape, or board shape. More specifically the valve body 30 can be described as substantially disk-shaped or the like.

The valve body 30 closes an opening of the pressure introducing portion 115 by being inserted into the case cylindrical portion 114. As a result of the valve body 30 closing the pressure introducing portion 115, in the pressure introducing portion 115, an air-tight state is maintained until the inside of the power storage module 500 reaches a desired pressure, in the state in which the pressure-regulating valve 1 is attached to the power storage module 500. When the pressure inside the power storage module 500 (hereinafter also simply referred to as "internal pressure") rises to a desired value, the valve body 30 separates from the cylindrical portion bottom portion 1113 and opens in response to the internal pressure of the power storage module 500. Here, a value of the internal pressure of the power storage module 500 at which the valve body 30 separates from the cylindrical portion bottom portion 1113 is determined to be able to avoid the internal pressure of the power storage module 500 becoming excessively large by the valve body 30 opening. Note that the value of the pressure of the inside of the power storage module 500 at which the valve body 30 separates from the cylindrical portion bottom portion 1113 can change depending on various conditions. Specifically, the value of the above-described internal pressure is a value capable of changing according to individual difference (variation) and a secular change of the valve body 30. By separating from the cylindrical portion bottom portion 1113, a gap occurs between the valve body 30 and the cylindrical portion bottom portion 1113. From this gap, the compressed gas in the power storage module 500 is introduced into the pressure-regulating valve 1 from the power storage module 500. As a result of the compressed gas being introduced to the inside of the pressure-regulating valve 1, the pressure inside the power storage module 500 is reduced. When the pressure inside the power storage module 500 is reduced, the valve body 30 returns to an original position inside the case cylindrical portion 114, that is, a position in contact with the cylindrical portion bottom portion 1113, by an elastic force, and closes the pressure introducing portion 115 airtightly.

Here, in the pressure-regulating valve 1, the electrolyte may be discharged with the compressed gas when the compressed gas in the power storage module 500 is discharged from the gap generated between the valve body 30 and the cylindrical portion bottom portion 1113 as a result of the valve body 30 separating from the cylindrical portion bottom portion 1113. In this case, the electrolyte may accumulate inside the case cylindrical portion 114.

The pressure-regulating valve 1 is provided with the electrolyte reservoir portion 130 having the air chambers 131 on a front side (one end side) of the pressure introducing portion 115 in the flow path from the opening 503 of the power storage module 500 to the case portion 110. The air chamber 131 is the space having a predetermined capacity capable of storing emissions such as the electrolyte discharged from the opening 503 of the power storage module 500 as shown in Fig. 4. Therefore, according to the pressure-regulating valve 1, by having the air chambers 131, it is possible to suppress discharge of emissions such as the electrolyte, in particular, ejection of the emissions due to a sudden change in pressure.

Further, by suppressing discharge of emissions by the air chamber 131, the pressure-regulating valve 1 can prevent a short circuit from occurring between a plurality of cells through the electrolyte when the plurality of valve bodies 30 simultaneously open and the electrolyte is discharged.

Consequently, according to the pressure-regulating valve 1, it is possible to improve the problem that occurs due to the electrolyte discharged from the power storage module 500.

Although the embodiment of the present invention is described above, the present invention is not limited to the embodiment of the present invention described above, but includes all aspects included in the idea and the claims of the present invention. Further, the respective components may be selectively combined as appropriate to exhibit at least part of the aforementioned problem and effects. For example, the shape, material, disposition, size and the like of each of the components in the above-described embodiment can be appropriately changed according to a specific use aspect of the present invention.

In the pressure-regulating valve 1 described above, in the valve body portion 10, the case portion 110, the cover portion 116, and the electrolyte reservoir portion 130 are respectively separate bodies (separate members), but they are not limited to the form like this. For example, the case portion 110 and the electrolyte reservoir portion 130 may be integrated. In other words, in the pressure-regulating valve 1, the air chamber 131 may be provided in the case portion 110.

The air chamber 131 can communicate in the front-back direction (Y-axis direction) in the electrolyte reservoir portion 130, and is not limited to those provided respectively on the one end side and the other end side of the electrolyte reservoir portion 130. In other words, in the electrolyte reservoir portion 130, the air chamber 131 itself may communicate in the front-back direction (Y-axis direction) without having the flow path portion 132. The air chamber 131 may be provided, for example, on either one of the one end side or the other end side of the electrolyte reservoir portion 130, and may communicate with another one of the one end side or the other end side of the electrolyte reservoir portion 130 by the flow path portion 132.

### List of Reference Signs

1 pressure-regulating valve for power storage module (pressure-regulating valve)
10 valve body portion
30 valve body
31 end surface
110 case portion
111 bottom portion
112 outer peripheral wall part
113 opening portion
114 case cylindrical portion
115 pressure introducing portion
116 cover portion
117 protrusion portion
130 electrolyte reservoir portion
131 air chamber
132 flow path portion
500 power storage module
502 frame body
503 opening
1112 inner surface
1113 cylindrical portion bottom portion
1111, 1122 end portion
1151 opening
1161 cover portion body
1311 air chamber opening portion
1312 bottom portion

## Claims

1. A pressure-regulating valve for a power storage module, comprising:
a valve body portion that opens in response to pressure in a power storage module to release the pressure in the power storage module; and
an electrolyte reservoir portion provided between the valve body portion and the power storage module, and capable of storing an electrolyte leaking from an inside of the power storage module toward the valve body portion.

2. The pressure-regulating valve for a power storage module according to claim 1, wherein
the electrolyte reservoir portion is configured by a member separate from the valve body portion.

3. The pressure-regulating valve for a power storage module according to claim 2, wherein
the electrolyte reservoir portion is formed into a plate shape.

4. The pressure-regulating valve for a power storage module according to any one of claims 1 to 3, wherein
the electrolyte reservoir portion has an air chamber having a space communicating with the valve body portion.

5. The pressure-regulating valve for a power storage module according to claim 4, wherein
the air chamber is provided on each of one end side and another end side of the electrolyte reservoir portion, and
the electrolyte reservoir portion has a flow path portion that causes the air chamber provided on the one end side and the air chamber provided on the other end side to communicate with each other.

6. The pressure-regulating valve for a power storage module according to claim 4, wherein
the electrolyte reservoir portion has a plurality of the air chambers.

7. The pressure-regulating valve for a power storage module according to claim 5, wherein
the electrolyte reservoir portion has a plurality of the air chambers.
